# EUROPEAN PATENT APPLICATION

(11) **EP 0 624 911 A1**
(43) Date of publication of application: **17.11.1994**
(21) Application number: 94303463.7
(22) Date of filing: 13.05.1994
(51) Int. Cl.: H01L 41/04

(54) **Vibration wave motor**

(30) Priority: 14.05.1993 JP 113035/93
(71) Applicant: CANON KABUSHIKI KAISHA, Tokyo (JP)
(72) Inventor: Kataoka, Kenichi, c/o Canon Kabushiki Kaisha, Ohta-ku, Tokyo (JP)
(74) Representative: Beresford, Keith Denis Lewis

(57) **Abstract**

This invention relates to a vibration wave motor. The vibration wave motor has frequency-velocity characteristics that the velocity abruptly changes in a frequency region lower than the resonance frequency, and the velocity Slowly changes in a frequency region higher than the resonance frequency. According to this invention, in consideration of the above characteristics, the startup characteristics of the motor are improved by driving the motor in a frequency region lower than the resonance frequency as a main region.

## Description

### BACKGROUND OF THE INVENTION

### Field of the Invention

The present invention relates to a driving device for a vibration type actuator device and, more particularly, to a driving device for a vibration type actuator device, which can achieve an accurate driving operation at high speed.

### Related Background Art

In a vibration type actuator device (e.g., a vibration wave motor), a vibration member is prepared by adhering a piezoelectric element or an electrostrictive element as an electro-mechanical energy conversion element on one surface of an elastic member of, e.g., a metal, such as an elastic member formed into an elliptic shape. The piezoelectric element is subjected to polarization processing before assembly into the vibration member. When AC electric fields having a predetermined phase difference therebetween are applied to the piezoelectric element, traveling vibration waves are generated on the other surface of the elastic member.

When the surface, on which the traveling vibration waves are generated, of the elastic member is defined as a driving surface, a contact member is brought into contact with the driving surface by a pressing means, thereby generating a relative driving force between the elastic member and the contact member by a friction force. The contact member includes a rotor for picking up a rotation force, a rail for a linear motion, a sheet such as paper, or the like.

In a vibration type actuator device of this type, since the contact member is always in press-contact with the elastic member of the vibration member, when the driving voltage supplied to the vibration member is stopped, a movable member is immediately stopped, thus providing characteristics suitable for alignment with high accuracy.

On the other hand, the following control methods for driving the vibration type actuator device are known:
(1) a method of setting the frequency of the driving voltage to be the resonance frequency of the vibration member, as described in Japanese Laid-Open Patent Application No. 61-203873; and
(2) a method of controlling the frequency of the driving voltage in a frequency region higher than the resonance frequency of the vibration member, as disclosed in Japanese Laid-Open Patent Application No. 62-203575.

The vibration type actuator device has frequency-velocity characteristics that the velocity changes abruptly in a frequency region lower than the resonance frequency of the vibration member, and it changes slowly in a frequency region higher than the resonance frequency. Thus, a frequency region higher than the resonance frequency is used in control. Therefore, in order to increase the velocity, the frequency is decreased, i.e., is brought close to the resonance frequency; in order to decrease the velocity, the frequency is increased, i.e., is separated away from the resonance frequency.

However, with the control method (1), in order to control the velocity, the amplitude of the voltage and the like must be changed in addition to the frequency of the driving voltage, resulting in complicated control and an increase in cost. It is difficult for an application with a large disturbance such as an actuator device to always control the frequency to the resonance frequency.

With the control method (2), when an actuator device is to be started at a large acceleration, the sweep speed of the frequency must be increased due to the slow frequency-velocity characteristics. For this reason, when a frequency region up to a frequency near the resonance frequency is to be used, the frequency may overshoot and decrease below the resonance frequency, and the actuator device may abruptly decelerate.

### SUMMARY OF THE INVENTION

One aspect of the application is to provide a driving device for a vibration type actuator device, which can achieve accurate velocity or position control of the vibration type actuator device at high speed.

One aspect of the application to provide a vibration type actuator device, in which the frequency of a driving voltage is controlled to have a region lower than the resonance frequency of a vibration member as a main control region, so that a target velocity can be reached in a short period of time, and the velocity characteristics can be prevented from abruptly changing even when the frequency exceeds the resonance frequency, thereby achieving the above-mentioned object.

Other objects of the present invention will become apparent from the following description of the embodiments taken in conjunction with the accompanying drawings.

### BRIEF DESCRIPTION OF THE DRAWINGS

Fig. 1 is a block diagram showing the first embodiment of a driving device for a vibration type actuator device according to the present invention;
Fig. 2 is a graph showing the response characteristics of the rotation velocity to the frequency of the driving voltage of the vibration type actuator device;
Fig. 3 is a block diagram showing the second embodiment of a driving device for a vibration type actuator device according to the present invention;
Fig. 4 is a block diagram showing the third embodiment of a driving device for a vibration type actuator device according to the present invention;
Fig. 5 is a block diagram showing the fourth embodiment of a driving device for a vibration type actuator device according to the present invention; and
Fig. 6 is a partially cutaway perspective view showing the arrangement of a thermal jet printer to be driven by the vibration type actuator device.

### DESCRIPTION OF THE PREFERRED EMBODIMENT

### (First Embodiment)

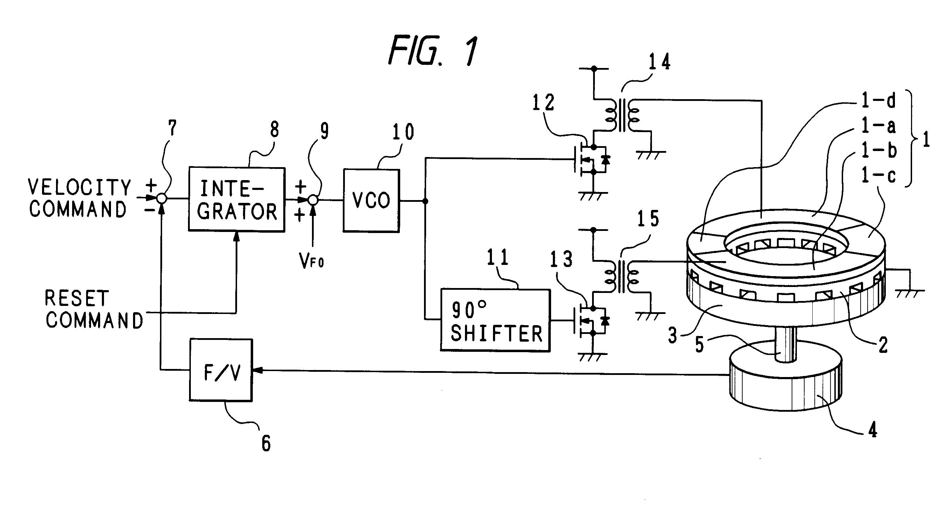

Fig. 1 is a block diagram showing the first embodiment of the present invention. Referring to Fig. 1, a piezoelectric element 1 has four electrodes 1-a to 1-d on a hollow disk surface. The piezoelectric element 1 is joined to one surface of an elastic member 2. Projection structures are concentrically formed on the other surface of the elastic member 2. In accordance with a predetermined high-frequency voltage output from transformers (to be described later) and applied to the electrodes 1-a and 1-b, very small elliptic vibrations are formed on the vertices of the projections of the elastic member 1. A rotor 3 is in press-contact with the elastic member 2 at a proper pressing force by a pressing force adjustment member (not shown), and is rotated at a velocity according to the magnitude of the amplitude, in the tangential direction, of elliptic vibrations at the contact portion. A rotary encoder 4 as a moving state detection means detects the rotation motion of the rotor 3 and generates a pulse signal of a frequency corresponding to the moving velocity of the rotor. The rotor 3 and the rotary encoder 4 are connected via a rotation shaft 5. A known F-V converter (F/V) 6 converts the frequency of the pulse signal corresponding to the rotation velocity of the rotor and output from the rotary encoder 4 into a voltage. The F/V 6 outputs a higher voltage as the rotation velocity becomes higher. A subtracter 7 outputs the difference between a voltage corresponding to a velocity command from a command means (not shown) and the output voltage from the F/V 6 as a voltage corresponding to the rotation velocity of the rotor and output from the rotary encoder 4. An integrator 8 integrates the output voltage from the subtracter 7, and initializes the integrated voltage to 0 V in response to a reset command from the command means (not shown). An adder 9 adds the output voltage from the integrator 8 and a predetermined voltage V_{F0}. A known voltage-controlled oscillator (VCO) 10 outputs a pulse voltage with a predetermined pulse width at a frequency corresponding to the output voltage from the adder 9. The VCO 10 outputs a pulse voltage of a higher frequency as the adder 9 outputs a higher voltage. A 90° shifter 11 generates a pulse voltage whose phase is delayed by 90° from the output pulse voltage from the VCO 10. MOSFETs 12 and 13 are connected to the primary sides (connected to power supplies) of the transformers (to be described later) to switch flow-in currents in accordance with the output pulse voltages from the VCO 10 and the 90° shifter 11. Transformers 14 and 15 have secondary sides connected to the electrodes 1-a and 1-b of the piezoelectric element 1, and generate high voltages.

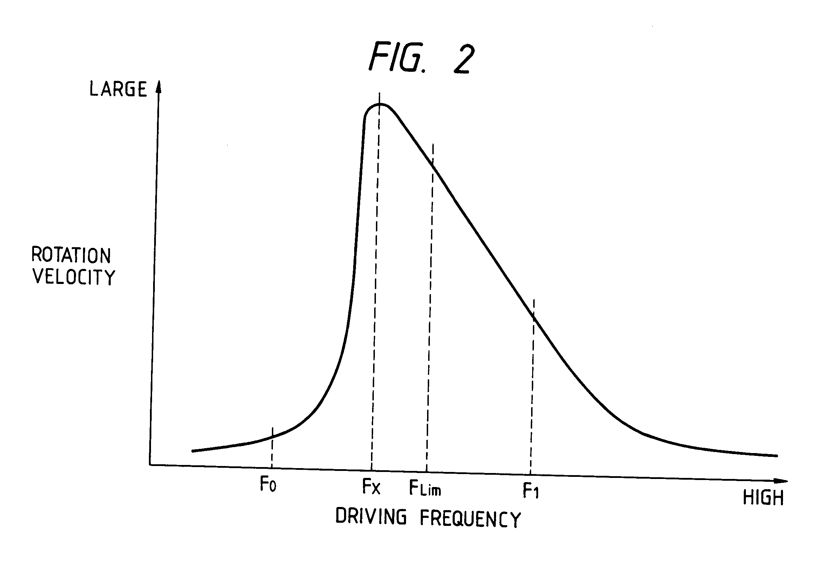

Fig. 2 is a graph showing the rotation velocity characteristics as a function of the frequency of the application voltage of the vibration type actuator device which is constituted by the piezoelectric element 1, the elastic member 2, and the rotor 3. The operation of the arrangement shown in Fig. 1 will be described below with reference to Fig. 2. Fig. 1 illustrates the arrangement for automatically controlling the rotation velocity of the vibration type actuator device in accordance with a velocity command from the command means (not shown). First, the operation for starting up the vibration type actuator device will be described. When the vibration type actuator device is inoperative, the power supplies at the primary sides of the transformers 14 and 15 are set to 0 V, the output voltage from the integrator 8 is reset to 0 V by a reset command from the command means (not shown), and the VCO 10 receives an input voltage V_{F0} and outputs a pulse voltage of the corresponding frequency. This frequency corresponds to F₀ in Fig. 2, and is lower than a maximum velocity frequency Fₓ of the elastic member 2 of the vibration type actuator device. Thus, pulse voltages having a 90° phase difference therebetween are input to the gates of the MOSFETs 12 and 13. Since the vibration type actuator device is inoperative, the output voltage from the F/V 6 is 0 V. In order to start up the actuator device, the command means (not shown) sets a predetermined velocity command, and cancels the reset command. Then, the rotation of the rotor 3, which is to rotate the vibration type actuator device at a rotation speed corresponding to F₀, is started.

An operation for maintaining the rotation velocity of the vibration type actuator device in accordance with the velocity command will be described. When the rotation velocity of the rotor 3 is low, since the output voltage from the F/V 6 is lower than a voltage according to the velocity command, the output from the subtracter 7 indicates a positive voltage. Therefore, the output voltage from the integrator 8 increases, the frequency of the pulse voltage output from the VCO 10 increases accordingly, and the rotation velocity of the rotor 3 increases toward a command velocity according to the frequency-velocity characteristics shown in Fig. 2. On the other hand, when the rotation velocity of the rotor 3 is higher than the command velocity, the output voltage from the integrator 8 decreases, the frequency of the pulse voltage output from the VCO 10 decreases accordingly, and the rotation velocity of the rotor 3 decreases toward the command velocity. In this manner, the rotation velocity of the vibration type actuator device is controlled to the command velocity.

When an abrupt load variation occurs for a short period of time, even if the driving frequency exceeds the maximum velocity frequency Fₓ as a result of the frequency control of the integrator 8, since a change in velocity with respect to a change in the frequency is slow in a frequency region higher than the maximum velocity frequency Fₓ, the rotor 3 can be prevented from abruptly decelerating, and stable control against a load variation can be realized.

### (Second Embodiment)

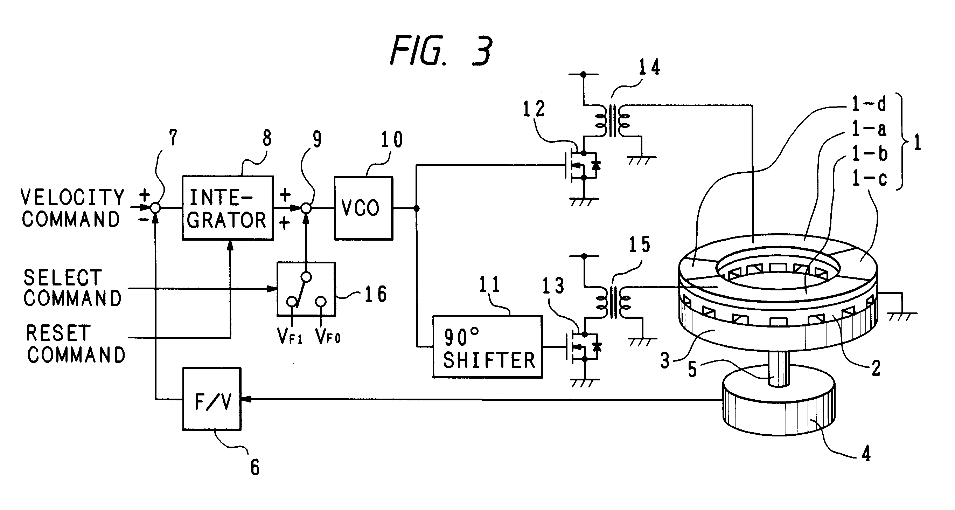

Fig. 3 is a block diagram showing the second embodiment of the present invention. Referring to Fig. 3, a selector 16 connects one of V_{F0} and V_{F1} to the adder 9 in accordance with a select command from the command means (not shown). The output frequencies of the VCO 10 obtained when V_{F0} and V_{F1} are respectively input to the VCO 10 are set to be F₀ and F₁ in Fig. 2. Since other arrangements are the same as those in the first embodiment shown in Fig. 1, a detailed description thereof will be omitted. The operation associated with the select command will be described below. The selector 16 operates when the vibration type actuator device is started up. Before the actuator device is started, the adder 9 is connected to V_{F1} by the selector 16, and the output voltage from the integrator 8 is 0 V in accordance with a reset command from the command means (not shown). Also, the power supplies at the primary sides of the transformers 14 and 15 are set to be 0 V. In order to start up the actuator device, the power supplies at the primary sides of the transformers 14 and 15 are set to be predetermined voltages, the actuator device is started up at a frequency F₁, the select command is changed after an elapse of a predetermined period of time so as to connect V_{F0} to the adder 9, and the reset signal to the integrator 8 is canceled. Thereafter, the rotation velocity of the vibration type actuator device is automatically controlled to the rotation velocity corresponding to the velocity command by the same operations as in the first embodiment. With this series of operations, even when the actuator device is not easily started up at a frequency lower than Fₓ, the actuator device can be quickly started up at a frequency higher than Fₓ.

### (Third Embodiment)

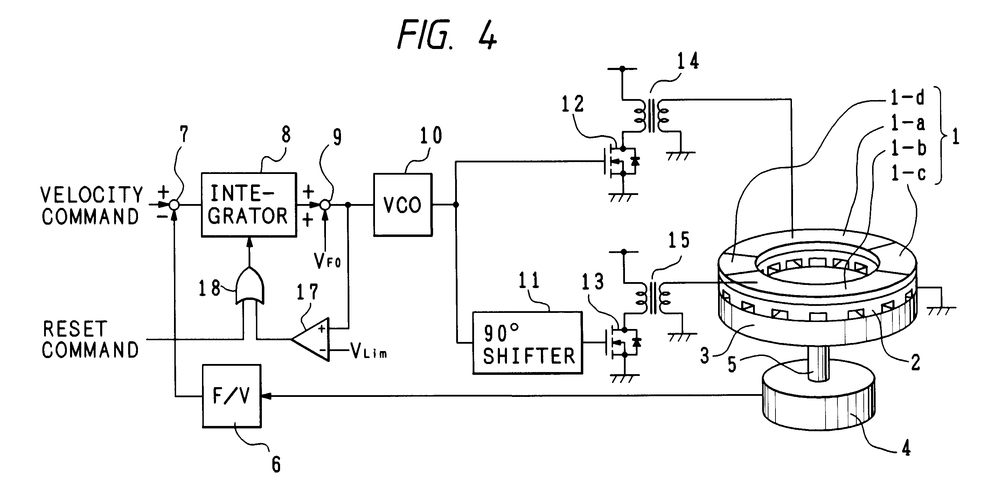

Fig. 4 is a block diagram showing the third embodiment of the present invention. The arrangement of this embodiment is substantially the same as that of the first embodiment shown in Fig. 1, except for a known comparator 17 and an OR gate 18. The OR gate 18 allows either a reset command (not shown) or the comparator 17 to reset the integrator 8, and the operation of the comparator 17 will be described below. The comparator 17 is arranged for the purpose of resetting the integrator 8 and resetting the frequency to F0 when the output frequency from the VCO 10 becomes equal to or higher than a predetermined frequency. Thus, the frequency can be prevented from falling outside the main control region shown in Fig. 2. The operation will be described in detail below. Note that the predetermined frequency corresponds to an output frequency F_{Lim} (Fig. 2) of the VCO 10 when a voltage V_{Lim} shown in Fig. 4 is input to the VCO 10. When the voltage of a signal connected to the positive input of the comparator 17 exceeds V_{Lim}, the output from the comparator 17 goes to High level, and the integrator 8 is reset. Since the output from the integrator 8 is reset to 0 V, and the positive input of the comparator 17 becomes V_{F0}, the output from the comparator 17 goes to Low level, and the reset state of the integrator 8 is canceled. In this manner, when the output frequency of the VCO 10 exceeds F_{Lim} as a frequency corresponding to V_{Lim}, the output from the comparator 17 goes to High level for an instance, the integrator 8 is reset, and the output frequency of the VCO 10 is reset to F₀.

In this embodiment, when the output frequency of the VCO 10 becomes equal to or higher than a predetermined frequency, the frequency is reset to F₀. Alternatively, the frequency may be reset to a predetermined value, or the frequency may be inhibited from increasing any more.

### (Fourth Embodiment)

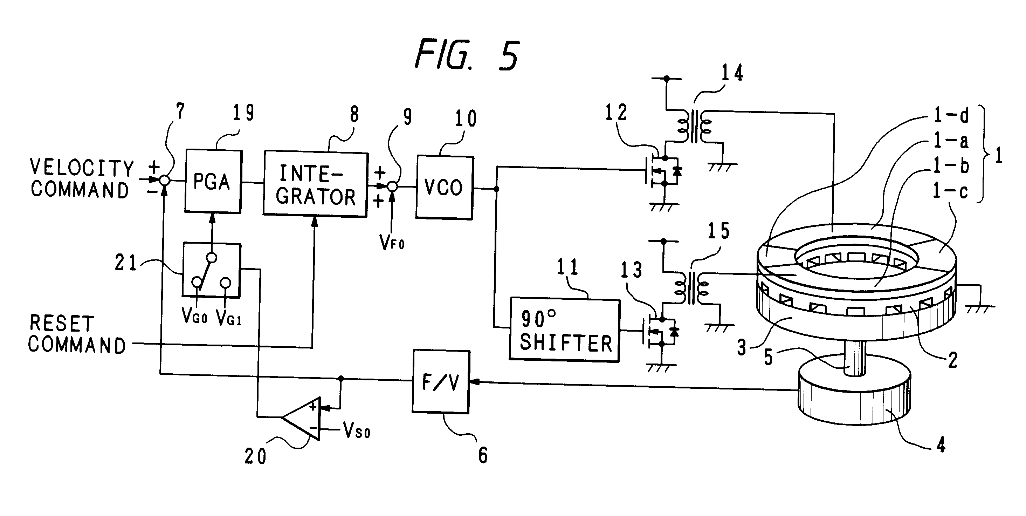

Fig. 5 is a block diagram showing the fourth embodiment of the present invention. The arrangement of this embodiment is substantially the same as those in the first embodiment shown in Fig. 1, except for a programmable gain amplifier (PGA) 19 whose gain can be changed by an external command, a known comparator 20, and a selector 21 for switching a gain command of the PGA 19 in accordance with the output signal from the comparator 20. The object and operation of these components will be described below. The output frequency from the VCO 10 upon startup of the vibration type actuator device is a frequency F₀ determined by V_{F0}. If the frequency difference between Fₓ and F₀ is large due to an environment factor such as temperature or a variation in characteristics of the vibration type actuator devices in the manufacture, the time required until the vibration type actuator device begins to move considerably varies when the frequency is swept to Fₓ after the actuator device is started up. Thus, the gain of the PGA 19 is set to be large upon startup of the actuator device so as to set a high frequency sweep speed, and after the rotation velocity has reached a predetermined velocity, the gain of the PGA 19 is set to be small to set a low frequency sweep speed, thereby realizing control which can satisfy both quick start and stable velocity control. The operation will be described in detail below. When the vibration type actuator device is started up, if the rotation velocity of the vibration type actuator device does not reach a predetermined velocity corresponding to a voltage V_{S0} input to the negative input of the comparator 20, the output from the comparator 20 goes to Low level. Thus, the switch of the selector 21 is connected to VG₀, and the gain of the PGA 19 is set to be G₀. Then, the output frequency of the VCO 10 is swept to Fₓ, the rotation velocity of the vibration type actuator device gradually increases, and the voltage at the positive input of the comparator 20 also gradually increases. When the velocity of the vibration type actuator device exceeds the predetermined velocity, and the voltage at the positive input of the comparator 20 exceeds V_{S0} corresponding to the predetermined velocity, the output from the comparator 20 goes to High level, the switch of the selector 21 is connected to V_{G1}, and the gain of the PGA 19 is set to be G₁. When G₀ is set to be larger than G₁, and G₁ is set to be a value suitable for controlling the rotation velocity, the above-mentioned object can be achieved. In the above description, two different gains are set. However, the number of gains is not limited to two as long as the gain is decreased in accordance with an increase in rotation velocity of the vibration type actuator device.

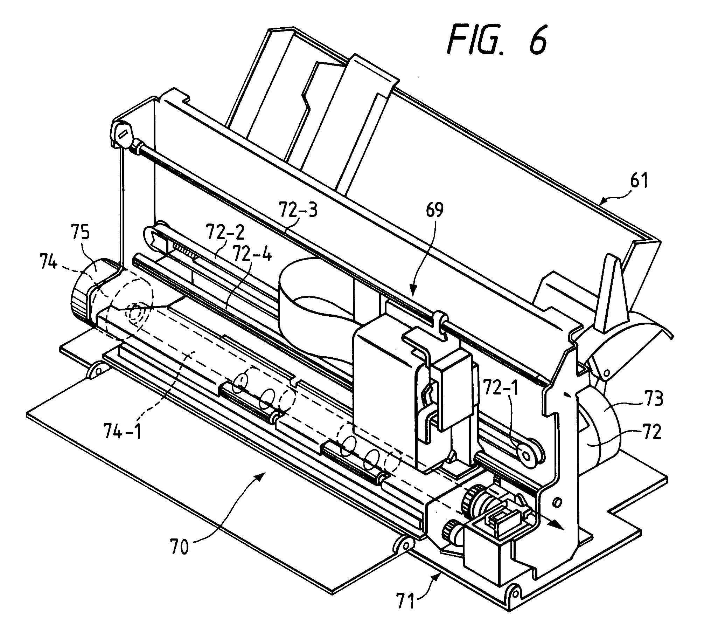

Fig. 6 is a partially cutaway perspective view showing an embodiment in which the vibration type actuator device of each of the above embodiments is utilized in a thermal jet printer. Referring to Fig. 6, the printer comprises a sheet supply unit 61, a carriage unit 69, a sheet feed unit 70, and a head recovery unit 71. In a print operation, one paper sheet picked up by the sheet supply unit 61 is fed to the sheet feed unit 71, an ink is ejected onto the paper sheet from a print head attached to the carriage unit 69 which is reciprocally movable, and the paper sheet is fed by one line by the sheet feed unit 70 in accordance with the reciprocal movement of the print head. In order to prevent ink clogging of the print head, any ink remaining in the print head is drawn by suction by the recovery unit 71 at a predetermined time interval. As an actuator device for driving the carriage unit, a rotary type vibration type motor 72 described in each of the above embodiments is arranged. In order to detect the rotation velocity and angle of the motor 72, a rotary encoder 73 is attached to the motor 72. The rotation shaft of the motor is coupled to a pulley 72-1 to drive a belt 72-2 looped on the pulley. The above-mentioned carriage unit is attached to the belt, and is moved along guide bars 72-3 and 72-4. Similarly, the sheet feed unit is driven by a vibration type motor 74, and a rotary encoder 75 is attached to the motor 74. A rotation portion 74-1 is rotated together with the rotation shaft of the motor 74 so as to feed a paper sheet. The motors 72 and 74 are driven by a controller which has the same function as that shown in Fig. 1.

## Claims

1. A vibration type actuator device comprising:
a) an electro-mechanical energy conversion element provided to a vibration member;
b) a frequency signal forming circuit for applying frequency signals having a phase difference therebetween to said energy conversion element; and
c) an adjustment circuit for adjusting a frequency of the frequency signals formed by said frequency signal forming circuit within a range from a predetermined first frequency lower than a resonance frequency to a predetermined frequency in a direction of the resonance frequency.

2. A device according to claim 1, wherein the actuator device includes a set circuit for setting the frequency to be adjusted by said adjustment circuit upon start up of said actuator device to be the first frequency.

3. A device according to claim 1 or 2, wherein the actuator device includes a regulating circuit for, when the frequency to be adjusted by said adjustment circuit becomes equal to a predetermined high frequency, inhibiting the frequency from being shifted to a frequency higher than the predetermined frequency.

4. A device according to any one of claims 1, 2, and 3, wherein said adjustment circuit sweeps the frequency from the first frequency at a first rate, and thereafter, sweeps the frequency at a second rate lower than the first rate.

5. A device according to claim 3, wherein the predetermined high frequency is a frequency higher than the resonance frequency.

6. A device according to claim 3 or 5, wherein said regulating circuit shifts the frequency to a frequency lower than the predetermined frequency when the frequency to be adjusted by said adjustment circuit becomes the predetermined high frequency.

7. A device according to claim 1, whrerein the actuator device includes a set circuit for setting an initial frequency to be a predetermined frequency higher than a resonance frequency upon startup of said actuator device, said adjustment circuit outputs the frequency signals at the initial frequency set by said set circuit, thereafter, shifts the frequency to a frequency lower than the resonance frequency, and sweeps the frequency from the lower frequency in the direction of the resonance frequency.

8. A device according to claim 1, wherein said actuator device is used as a driving source for a printer apparatus.

9. A vibration wave motor comprising a vibration member (2), an electro-mechanical energy conversion element (3) for driving engagement by said vibration member, a frequency signal forming circuit (12, 14; 11,13,15) for applying frequency signals having a phase difference therebetween to said energy conversion element; and an adjustment circuit (6) for adjusting a frequency of the frequency signals formed by said frequency signal forming circuit within a range from a predetermined first frequency lower than the resonant frequency to a predetermined second frequency closer to the resonant frequency.

10. An ink jet printer having a carriage unit (69) driven by an actuator device or motor as claimed in any one of claims 1-9.
